# EUROPÄISCHE PATENTSCHRIFT

(11) **EP 3 255 760 B1**
(45) Veröffentlichungstag und Bekanntmachung des Hinweises auf die Patenterteilung: **29.12.2021**
(21) Anmeldenummer: 16173200.3
(22) Anmeldetag: 06.06.2016
(51) Int. Cl.: H02K 7/09, F16C 32/04

(54) **ELEKTRISCHE MASCHINE**
ELECTRIC MACHINE
MACHINE ELECTRIQUE

(43) Veröffentlichungstag der Anmeldung: 13.12.2017
(73) Patentinhaber: Linz Center of Mechatronics GmbH, 4040 Linz (AT)
(72) Erfinder: Mitterhofer, Hubert, 3386 Hafnerbach (AT)
(74) Vertreter: Jell, Friedrich

(56) Entgegenhaltungen:
- WO-A1-2015/024830
- DE-A1- 2 337 696
- JP-A- H07 305 723
- US-A- 5 155 402
- US-A- 5 321 986
- US-A- 6 053 705
- US-A- 6 111 332
- US-A1- 2003 042 816
- None

## Beschreibung

Die Erfindung betrifft eine elektrische Maschine mit Lagermitteln zur magnetischen Lagerung mindestens eines, relativ zu wenigstens einem anderen Körper um eine Rotationsachse rotierbaren Körpers, wobei mindestens einer der Körper wenigstens ein Mittel aufweist, um das Erregermagnetfeld der elektrischen Maschine bereitzustellen, mit wenigstens einer Wicklung, die mit dem Erregermagnetfeld zusammenwirkt ein Drehmoment um die Rotationsachse und/oder eine Tragkraft zur magnetischen Lagerung zu erzeugen.

Um dem Verkippen der Rotationsachse eines magnetisch drehbar gelagerten Körpers entgegenzuwirken, können magnetische Lager, wie etwa mehrere magnetische Radiallager bei länglichen rotierbaren Körpern, oder magnetische Kipplager oder Axiallager bei scheibenförmigen rotierbaren Körpern, eingesetzt werden. Sind diese Lager als aktive Magnetlager ausgeführt, so wirken sie sich aufgrund der notwendigen Bauteile besonders nachteilig auf den benötigten Bauraum, die Herstellungskosten und die Fertigung der elektrischen Maschine aus. Bei Lagern, die als passive Magnetlager mit Permanentmagneten in attraktiver oder repulsiver Anordnung ausgeführt sind, sind der benötigte Bauraum und die Herstellungskosten zumeist geringer als bei aktiven Magnetlagern, insbesondere wenn das in der elektrischen Maschine vorhandene Erregermagnetfeld wie bei lagerlosen Scheibenläufermotoren (EP0860046B1) auch für die passiven Magnetlager verwendet wird. Allgemein nachteilig an passiven Magnetlagern ist die schwache Dämpfung des magnetisch stabilisierten Freiheitsgrades. Insbesondere beim Verkippen der Rotationsachse eines rotierenden Körpers kann es dadurch zu Präzessions- und Nutationsbewegungen kommen. Zusammen mit der geringen Steifigkeit eines Magnetlagers im Vergleich zu mechanischen Lagern ergeben sich Kippresonanzen bei sehr niedrigen Frequenzen, die leicht angeregt werden und zum Versagen der elektrischen Maschine führen können.

Um dem Verkippen der Rotationsachse eines magnetisch gelagerten rotierbaren Körpers entgegenzuwirken und zusätzlich dämpfend auf die Präzessions- und Nutationsbewegung zu wirken sind aus dem Stand der Technik (US5469006A) Kompensationsmittel auf Basis elektrodynamischer Effekte zu Folge der Wechselwirkung von elektrischen Leiterschleifen, Magnetfeldern und deren relativer Bewegung zueinander bekannt. Dabei existieren Ausführungsformen mit homopolarem Magnetfeld oder heteropolarem Magnetfeld, welche jeweils mit mindestens einer Leiterschleife am rotierbaren Körper und mindestens einem magnetfelderzeugenden Mittel am nicht rotierbaren Körper oder umgekehrt mit mindestens einem magnetfelderzeugenden Mittel am rotierbaren Körper und mindestens einer Leiterschleifen am nicht rotierbaren Körper ausgestattet sein können.

In bekannte Ausführungsformen mit homopolarem Magnetfeld (Lembke, Design and Analysis of a Novel Low Loss Homopolar Electrodynamic Bearing, KTH Stockholm, 2005), welche mit mindestens einem magnetfelderzeugenden Mittel am rotierbaren Körper und mindestens einer Leiterschleifen am nicht rotierbaren Körper ausgestattet sind, wird dem Verkippen der Rotationsachse nachteilig nur schwach entgegengewirkt, da nicht die Rotationsfrequenz des rotierbaren Körpers sondern lediglich die Frequenz und Amplitude des Verkippens die Stärke der Ausprägung des elektrodynamischen Effekts bestimmt.

In bekannten Ausführungsformen mit heteropolarem Magnetfeld (WO2015024830A1) wiederum sind die Verkettung des heteropolaren Magnetfelds mit der oder den Leiterschleifen auch im Fall einer nicht verkippten Rotationsachse, der dadurch auftretende elektrodynamische Effekt und die damit verbundenen ohmschen Verluste präsent, sofern die Leiterschleifen nicht derart ausgeformt sind, dass sich nachteilig die verketteten Magnetfeldanteile mehrerer Schleifenteile exakt kompensieren (sogenannte Null-Flux Lager) und die gesamte Leiterschleife somit verkettungsfrei ist.

Nachteilig zeigt sich bei allen bekannten Ausführungsformen, dass die Kompensationsmittel um dem Verkippen der Rotationsachse entgegenzuwirken zusätzlich zum Erregermagnetfeld der elektrischen Maschine zumindest ein weiteres Magnetfeld und damit zusätzliche magnetfelderzeugende Mittel beinhalten, was sich ungünstig auf den benötigte Bauraum und die Herstellungskosten auswirkt.

Aus der DE2337696A1 ist eine elektrische Maschine mit Lagermitteln zur magnetischen Lagerung eines rotierbaren Körpers und einem Kompensationsmittel bekannt, um dem Verkippen der Rotationsachse des Körpers entgegenzuwirken.

Die US5321986A offenbart einen elektrischen Antrieb für ein Gyroskop. Dieser weist einen permanenterregten Rotorstab auf, welcher gegen eine Verkippung der Rotationsachse aktiv gelagert ist.

Die Erfindung hat sich daher die Aufgabe gestellt, eine elektrische Maschine nach eingangs erwähnter Art zuverlässiger zu gestalten und die Herstellungskosten gering zu halten.

Die Erfindung löst die gestellte Aufgabe durch die Merkmale des Anspruchs 1.

Durch die Verkettungsfreiheit mit dem Erregermagnetfeld treten in der elektrischen Leiterschleife in der Referenzlage der Rotationsachse keine elektrodynamischen Effekte und keine damit verbundenen Verluste auf. Bei verkippter Rotationsachse bestimmen sowohl die Frequenz und Amplitude des Verkippens als auch die Rotationsfrequenz des rotierbaren Körpers die Stärke der Ausprägung des elektrodynamischen Effekts. Da die Rotationsfrequenz bei elektrischen Maschinen häufig deutlich über jener des Verkippens der Rotationsachse liegt, wirkt die Erfindung dem Verkippen stark entgegen. Durch das Heranziehen des Erregermagnetfeldes für den elektrodynamischen Effekt des Kompensationsmittels sind sehr kompakte und kostengünstig realisierbare Bauformen möglich. Dem Verkippen der Rotationsachse einer elektrischen Maschine wird damit standfest entgegengewirkt, ohne zusätzliche Verluste im Fall der nicht verkippten Rotationsachse zu generieren und ohne zusätzlich zum Erregermagnetfeld der elektrischen Maschine weitere Magnetfelder und damit weitere magnetfelderzeugende Mittel einzusetzen, wodurch eine zuverlässigere elektrische Maschine geschaffen werden kann. Der benötigte Bauraum und die Herstellungskosten können dabei zudem gering gehalten werden.

Ist wenigstens ein Mittel zur Erzeugung des Erregermagnetfelds ein Permanentmagnet, so kann dieser besonders leicht als Teil des rotierbaren Körpers realisiert werden, da keine Zuleitungen für elektrische Ströme wie bei einem Elektromagneten oder zusätzliche Zuleitungen für Kühlung wie bei einem supraleitenden Element nötig sind. Die elektrische Maschine kann dadurch zuverlässiger gestaltet werden ohne die Herstellungskosten zu erhöhen.

Verfügt wenigstens ein Mittel zur Erzeugung des Erregermagnetfelds über radiale oder Halbach-artige Magnetisierung mit ungerader Polpaarzahl oder über diametrale Magnetisierung, so kann eine konstruktiv einfache, ringförmige Leiterschleife als Kompensationsmittel verwendet werden, da es dann durch die unterschiedliche Polarität der jeweils gegenüberliegenden Pole des Erregermagnetfelds beim Verkippen der Rotationsachse zu einer Verkettung zwischen Leiterschleife und Erregermagnetfeld kommt, während bei gerader Polpaarzahl des Erregermagnetfelds zusätzliche Flussführungsmittel durch ferromagnetische Bauteile oder asymmetrische Polplatzierung nötig sind. Eine konstruktiv einfache elektrische Maschine kann demnach geschaffen werden.

Das Kompensationsmittel ist Teil des zweiten, nicht-rotierbaren Körpers.

Die Standfestigkeit der elektrischen Maschine kann erhöht werden, wenn mindestens eine Leiterschleife der Kompensationsmittel aus mehreren Windungen besteht. Für Platzierungen, bei denen die gesamte Leiterschleife oder Schleifenteile direkt vom sich durch die Rotation zeitlich ändernden Erregermagnetfeld durchflutet werden und somit Wirbelströme im Schleifenmaterial auftreten, ist es günstig, die Leiterschleife anstatt aus einem massiven Leiter aus mehreren, insbesondere dünneren Windungen auszuführen.

Besteht mindestens eine Leiterschleife der Kompensationsmittel aus einem elektrisch und auch magnetisch leitfähigen Material und dient diese gleichzeitig zur Flussführung für die elektrische Maschine oder ein magnetisches Lager, so kann die elektrische Maschine konstruktiv einfacher gestaltet werden. Die Leiterschleife als Teil des Kompensationsmittels muss zumindest aus elektrisch leitfähigem Material bestehen. Insbesondere kann für sehr kompakte Ausführungen der Leiterschleife diese aus einem ferromagnetischen Material bestehen, das zugleich elektrisch und magnetisch leitfähig ist, sodass die Leiterschleife neben der Wirkung als Kompensationsmittel um der Verkippung der Rotationsachse entgegenzuwirken auch magnetischen Fluss des Erregermagnetfeldes führt. Dadurch kann eine Leiterschleife als Kompensationsmittel vorgesehen werden ohne die Querschnittsfläche zur Flussführung in der elektrischen Maschine oder einem magnetischen Lager zu reduzieren.

Erfindungsgemäß ist in der Referenzlage die von der Leiterschleife des Kompensationsmittels bezüglich der Verkettung des Erregermagnetfelds wirksame aufgespannte Ebene zur Rotationsachse orthogonal. Dies ist besonders vorteilhaft, wenn das Erregermagnetfeld im Bereich der Leiterschleife des Kompensationsmittels im Wesentlichen aus, in Bezug auf die Rotationsachse, radialen und/oder tangentialen Komponenten besteht.

Dadurch wird gewährleistet, dass die Leiterschleife in der Referenzlage mit dem Erregermagnetfeld verkettungsfrei ist und keine ohmschen Verluste entstehen.

Erfindungsgemäß ist die mindestens eine Leiterschleife des Kompensationsmittels elektrisch kurzgeschlossen. Dies ermöglicht eine kompakte und einfache Ausführungsform, da keine zusätzlichen Elemente vorgesehen werden müssen. Die Wirkung des Kompensationsmittels ist damit als passiv zu bezeichnen. Eine konstruktiv einfache elektrische Maschine kann so geschaffen werden.

Ist mindestens eine Leiterschleife des Kompensationsmittels mit mindestens einem zusätzlichen Bauteil, insbesondere einem Widerstand, einer Kapazität und/oder Induktivität ausgestattet, so ist dies vorteilhaft um die Phase und/oder Amplitude der Spannung oder des Stroms zu beeinflussen. Durch den elektrodynamischen Effekt auf Grund der Wechselwirkung von Erregermagnetfeld und Leiterschleife des Kompensationsmittels kommt es in der Leiterschleife zur Induktion einer Spannung oder eines Stroms. Eine zuverlässigere Vorrichtung kann somit geschaffen werden.

Ist in der elektrischen Maschine zumindest ein Mittel zum Messen von Spannung und/oder Strom, insbesondere der induzierten Spannung und/oder des Kurzschlussstroms, oder dem dadurch erzeugten elektromagnetischen Feld in mindestens einer Leiterschleife des Kompensationsmittels vorgesehen um in Abhängigkeit der Messdaten den Kippwinkel oder die axiale Auslenkung entlang der Rotationsachse zu detektieren, so ist dies vorteilhaft, da dadurch auf zusätzliche Sensoren zum Erfassen dieser Größen verzichtet werden kann. Eine konstruktiv einfache Vorrichtung kann damit geschaffen werden.

Eine auf Grund ihrer Kompaktheit besonders vorteilhafte Bauform wird erreicht, wenn die Lagermittel zur magnetischen Lagerung in die elektrische Maschine integriert sind, sodass eine lagerlose Maschine entsteht, welche mit einem scheibenförmigen Rotor ausgestattet ist. Als lagerlose Maschine wird in der Literatur eine elektrische Maschine bezeichnet, deren Erregermagnetfeld neben der Wechselwirkung mit drehmomentbildendem Strom auch mit lagerkraftbildendem Strom wechselwirkt um eine aktive Magnetlagerung zu erzeugen. Dabei können getrennte Wicklungen für drehmomentbildenden Strom und lagerkraftbildenden Strom vorgesehen sein oder alle Stromkomponenten auch überlagert und in einer gemeinsamen Wicklung geführt werden. Ausgestattet mit einem scheibenförmigen Rotor kann eine hochkompakte Ausführungsform gefunden werden, in der nur ein Erregermagnetfeld für die Drehmomenterzeugung, für die aktive radiale Magnetlagerung, für die passive axiale Magnetlagerung, für die passive Kippmagnetlagerung verwendet wird und gleichzeitig mit dem beschriebenen Kompensationsmittel zusammenwirkt, der Verkippung der der Rotationsachse entgegenzuwirken.

In den Figuren ist beispielsweise der Erfindungsgegenstand anhand eines Ausführungsbeispiels näher dargestellt. Es zeigen
- Fig. 1: eine schematische Ansicht auf ein erstes Ausführungsbeispiel der elektrischen Maschine in teilweiser Darstellung mit einem rotierbaren Körper in Referenzlage,
- Fig. 2: eine schematische Ansicht auf ein erstes Ausführungsbeispiel der elektrischen Maschine in teilweiser Darstellung mit einem rotierbaren Körper in verkippter Istlage,
- Fig. 3: eine schematische Ansicht auf ein erstes Ausführungsbeispiel der elektrischen Maschine in teilweiser Darstellung mit einem rotierbaren Körper in axial entlang der Rotationsachse ausgelenkter Lage und
- Fig. 4: eine schematische Ansicht auf ein zweites Ausführungsbeispiel der elektrischen Maschine in teilweiser Darstellung mit zwei Leiterschleifen.

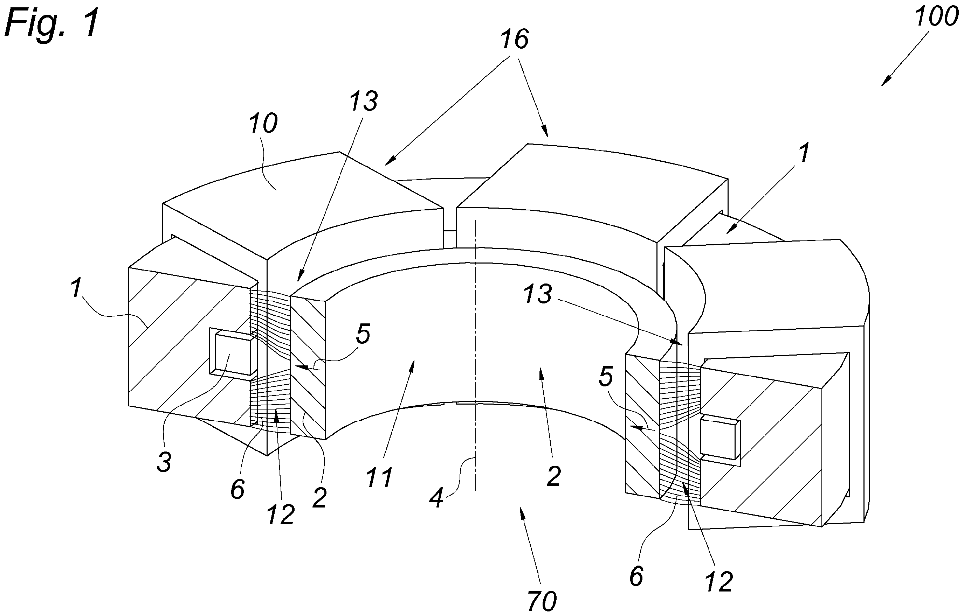

Fig. 1 zeigt eine lagerlose elektrische Maschine 100, umfassend einen nicht rotierbaren Körper 1 aus weichmagnetischem Material, einen beispielhaft nur aus einem ringförmigen Permanentmagnet 11 mit diametraler Magnetisierungsrichtung 5 bestehenden rotierbaren Körper 2, eine ringförmig um die Rotationsachse 4 angeordnete Leiterschleife 3 aus elektrisch leitfähigem Material, sowie eine, beispielsweise mehrere Toroidspulen umfassende, Wicklung 10, die mit dem Erregermagnetfeld 12 zusammenwirkt ein Drehmoment um die Rotationsachse 4 und eine radiale Tragkraft zur magnetischen Lagerung zu erzeugen. Für eine Reduktion der Reluktanz des magnetischen Kreises ist es günstig, einen Innenrückschluss im rotierbaren Körper 2 anzubringen, der aus Gründen der Übersichtlichkeit in den Figuren nicht dargestellt ist. Zur besseren Verdeutlichung der magnetischen Verhältnisse sind in der Schnittebene die Feldlinien 6 des Erregermagnetfelds 12 im Luftspalt 13 zwischen rotierbarem 2 und nicht rotierbarem Körper 1 dargestellt. Die Rotationsachse 4 ist in Fig. 1 in der nicht verkippten Referenzlage 70 dargestellt und dementsprechend ist die Leiterschleife 3 mit dem Erregermagnetfeld 12 verkettungsfrei. Dies wird deutlich, da sich die Feldlinien 6 beim Austritt aus dem Permanentmagneten 11 in gleicher Weise teilen um ober- und unterhalb der Leiterschleife 3 in den weichmagnetischen nicht rotierbaren Körper 1 einzutreten, wie sie an der gegenüberliegenden Position wieder aus diesem austreten um in erneut in den Permanentmagneten 11 zurückzuführen. Es kommt daher zu keinem magnetischen Fluss durch die, von der Leiterschleife 3 aufgespannte, Fläche und somit zu keiner induzierten Spannung bzw. keinem Kurzschlussstrom und keinen damit einhergehenden ohmschen Verlusten. Eine Rotation des rotierbaren Körpers 2 um die Rotationsachse 4 oder eine radiale Auslenkung, also eine Parallelverschiebung der Rotationsachse 4 bringt keine Änderung dieses Verhaltens.

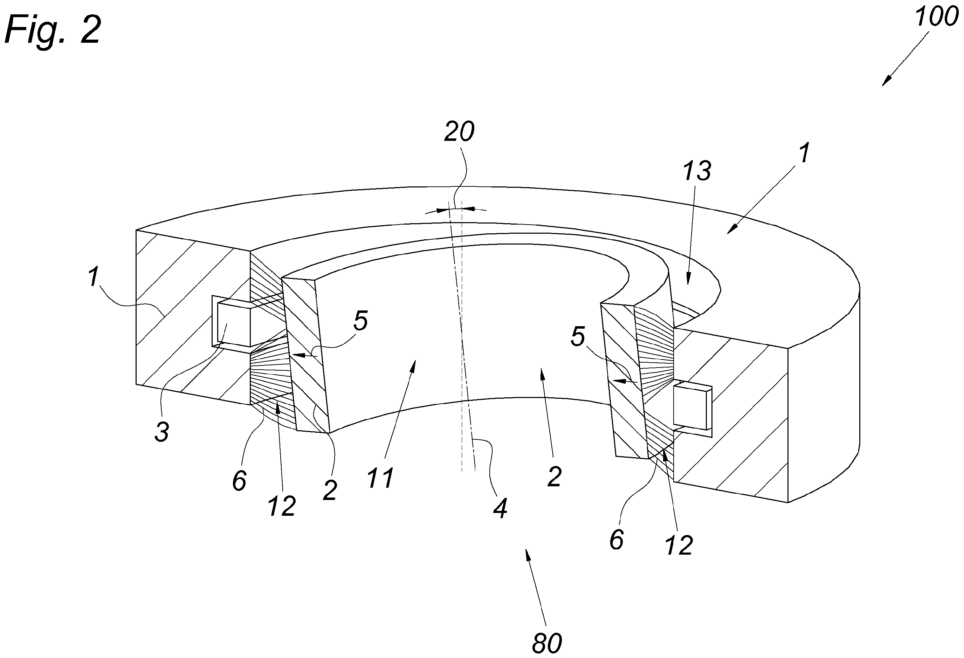

Fig. 2 zeigt die in Fig. 1 dargestellte lagerlose elektrische Maschine 100 mit zur besseren Übersicht ausgeblendeter Wicklung 10 und einer Rotationsachse 4 in verkippter Istlage 80. Durch die Verkippung der Rotationsachse (4) ändert sich die magnetische Feldverteilung des Erregermagnetfelds 12, wie durch die in der Schnittebene von Fig. 2 dargestellten Feldlinien 6 des Erregermagnetfelds 12 im Luftspalt 13 deutlich wird. Beim Austritt aus dem Permanentmagneten 11 treten mehr Feldlinien 6 in die untere Hälfte des weichmagnetischen nicht rotierbaren Körpers 1 ein, als in die obere. An der gegenüberliegenden Position treten mehr Feldlinien 6 aus der oberen Hälfte des weichmagnetischen nicht rotierbaren Körpers 1 aus, als aus der oberen. Dadurch durchdringt ein Teil des Flusses die, von der Leiterschleife 3 aufgespannte Ebene, anders ausgedrückt kommt es zu einer Verkettung des Erregermagnetfelds 12 mit der Leiterschleife 3. Die Verkettung ändert sich durch Verkippen der Rotationsachse 4, durch Rotation des Körpers 2 bei konstant verkippter Rotationsachse 4 oder durch eine Kombination aus beiden Bewegungen. Am deutlichsten wird dieser Umstand, wenn der Körper 2 aus der dargestellten Lage um 180° um die Rotationsachse 4 rotiert wird, da sich dadurch die Polarität des Erregermagnetfelds 12 und somit auch die Polarität der Magnetfeldverkettung mit der Leiterschleife 3 umkehrt. Diese Änderungen bewirken einen elektrodynamischen Effekt, der sich durch Spannungsinduktion bzw. Kurzschlussströme in der Leiterschleife 3 auswirkt und der Verkippung der Rotationsachse 4 entgegenwirkt.
Obwohl in den Figuren Fig. 1, Fig. 2 und Fig. 3 eine elektrische Maschine mit innen liegendem rotierbaren Körper 2 (sog. Innenläufer) dargestellt ist, ist der beschriebene Effekt ebenso für einen außen liegenden rotierbaren Körper (sog. Außenläufer) gültig.

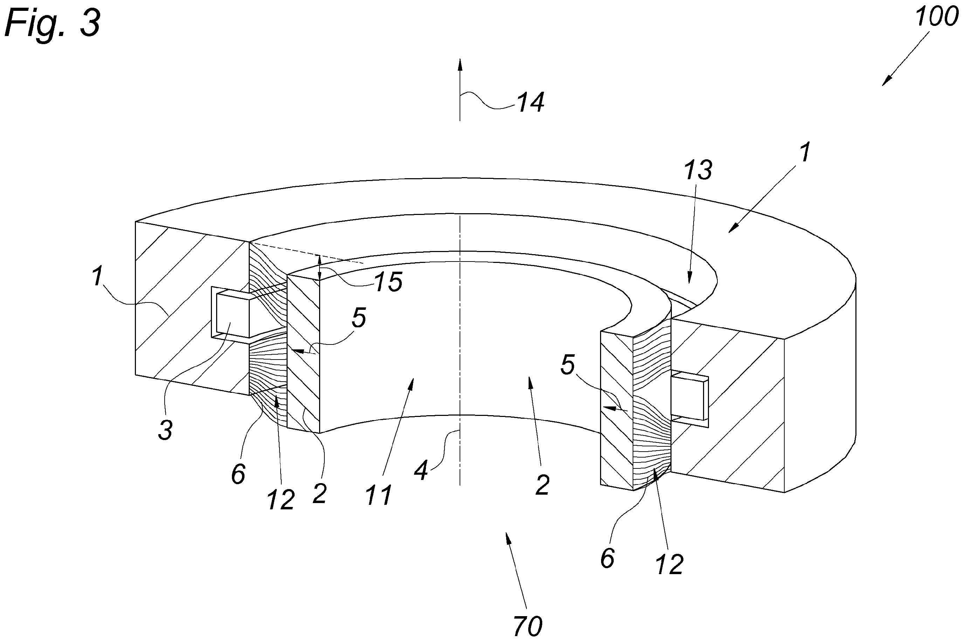

Fig. 3 zeigt die in Fig. 1 und Fig. 2 dargestellte lagerlose elektrische Maschine 100 mit zur besseren Übersicht ausgeblendeter Wicklung 10, einer Rotationsachse 4 in nicht verkippter Referenzlage 70 und einem rotierbaren Körper 2, der in axialer Richtung 14 entlang der Rotationsachse 4 ausgelenkt ist. Die Verteilung der Feldlinien 6 ist durch die axiale Verschiebung 15 im Vergleich zum nicht ausgelenkten rotierbaren Körper 2 in Fig. 1 verändert, allerdings kommt es anders als beim Verkippen der Rotationsachse 4 in Fig. 2 zu keiner Verkettung von Leiterschleife 3 und Erregermagnetfeld 12 und demzufolge zu keinem elektrodynamischen Effekt, zu keiner induzierten Spannung bzw. keinem Kurzschlussstrom und keinen damit einhergehenden ohmschen Verlusten.

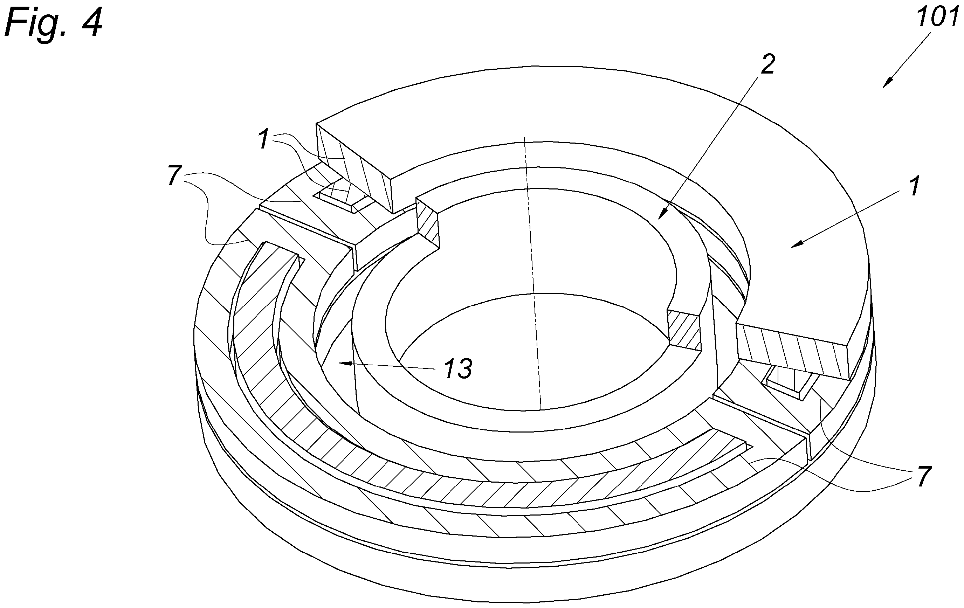

Im Stufenschnitt durch eine lagerlose elektrische Maschine 101 in Fig. 4 sind zwei Leiterschleifen 7 sichtbar, an welchen mehrere Prinzipien verdeutlicht werden können. Sind die Leiterschleifen 7 wie in der Fig. 4 dargestellt kurzgeschlossen, so wirken sie analog zur Anordnung in Fig. 1, indem sie bei verkippter Rotationsachse 4 mit dem Erregermagnetfeld 12 verkettet sind und der Verkippung entgegenwirken.

## Patentansprüche

1. Elektrische Maschine mit Lagermitteln zur magnetischen Lagerung mindestens eines um eine Rotationsachse (4) rotierbaren Körpers (2) relativ zu wenigstens einem nicht rotierbaren Körper (1), umfassend den mindestens einen rotierbaren Körper (2) und wenigstens einen nicht rotierbaren Körper (1), wobei der rotierbare Körper (2) wenigstens ein Mittel aufweist, um ein Erregermagnetfeld (12) der elektrischen Maschine (100, 101) bereitzustellen, wobei der nicht rotierbare Körper (1) wenigstens eine Wicklung (10), die mit dem Erregermagnetfeld (12) zusammenwirkt ein Drehmoment um die Rotationsachse (4) zu erzeugen, und weiter mindestens ein Kompensationsmittel (16) aufweist, das zumindest eine von der Wicklung (10) getrennte elektrische Leiterschleife (3, 7) aufweist, die einerseits in einer Referenzlage (70) der Rotationsachse (4) mit dem Erregermagnetfeld (12) verkettungsfrei ist und andererseits in mindestens einer gegenüber der Referenzlage (70) verkippten Istlage (80) der Rotationsachse (4) mit dem Erregermagnetfeld (12) verkettet ist, wobei die Leiterschleife (3, 7) des Kompensationsmittels (16) elektrisch kurzgeschlossen ist, wobei in der Referenzlage (70) die von der Leiterschleife (3, 7) des Kompensationsmittels (16) bezüglich der Verkettung des Erregermagnetfelds (12) wirksame aufgespannte Ebene zur Rotationsachse (4) orthogonal ist, und wobei die Leiterschleife (3, 7) in der gegenüber der Referenzlage (70) verkippten Istlage (80) der Rotationsachse (4) mit dem Erregermagnetfeld (12) verkettet ist, um der Verkippung (20) entgegenzuwirken.

2. Elektrische Maschine nach Anspruch 1, **dadurch gekennzeichnet, dass** das Mittel zur Erzeugung des Erregermagnetfelds (12) ein Permanentmagnet (11) ist.

3. Elektrische Maschine nach Anspruch 1 oder 2, **dadurch gekennzeichnet, dass** das Mittel zur Erzeugung des Erregermagnetfelds (12) über radiale oder Halbach-artige Magnetisierung mit ungerader Polpaarzahl oder über diametrale Magnetisierung verfügt.

4. Elektrische Maschine nach einem der Ansprüche 1 bis 3, **dadurch gekennzeichnet, dass** die Leiterschleife (3, 7) des Kompensationsmittels (16) aus mehreren Windungen besteht.

5. Elektrische Maschine nach einem der Ansprüche 1 bis 4, **dadurch gekennzeichnet, dass** die Leiterschleife (3, 7) des Kompensationsmittels (16) aus einem elektrisch und auch magnetisch leitfähigen Material besteht und gleichzeitig zur Flussführung für die elektrische Maschine (100, 101) oder ein magnetisches Lager dient.

6. Elektrische Maschine nach einem der Ansprüche 1 bis 5, **dadurch gekennzeichnet, dass** die Leiterschleife (3, 7) des Kompensationsmittels (16) mit mindestens einem zusätzlichen Bauteil, insbesondere einem Widerstand, einer Kapazität und/oder Induktivität ausgestattet ist.

7. Elektrische Maschine nach einem der Ansprüche 1 bis 6, **dadurch gekennzeichnet, dass** zumindest ein Mittel zum Messen von Spannung und/oder Strom, insbesondere der induzierten Spannung und/oder des Kurzschlussstroms, oder dem dadurch erzeugten elektromagnetischen Feld in der Leiterschleife (3, 7) des Kompensationsmittels vorgesehen ist und in Abhängigkeit der Messdaten der Kippwinkel oder die axiale Verschiebung detektiert wird.

8. Elektrische Maschine nach einem der Ansprüche 1 bis 7, **dadurch gekennzeichnet, dass** die Lagermittel zur magnetischen Lagerung in die elektrische Maschine (100, 101) integriert sind, sodass eine lagerlose Maschine entsteht, welche mit einem scheibenförmigen Rotor ausgestattet ist.

9. Elektrische Maschine nach einem der Ansprüche 1 bis 8, **dadurch gekennzeichnet, dass** die Wicklung (10) mit dem Erregermagnetfeld (12) zusätzlich zusammenwirkt eine Tragkraft zur magnetischen Lagerung zu erzeugen.

## Claims

1. Electric machine having bearing means for magnetically supporting at least one body (2) rotatable about an axis of rotation (4) relative to at least one non-rotatable body (1), comprising said at least one rotatable body (2) and at least one non-rotatable body (1), wherein said rotatable body (2) comprises at least one means for providing an excitation magnetic field (12) of the electric machine (100, 101), wherein the non-rotatable body (1) comprises at least one winding (10) cooperating with the excitation magnetic field (12) to generate a torque about the axis of rotation (4), and further comprises at least one compensation means (16) having at least one electric conductor loop (3, 7) separated from the winding (10) which, on the one hand, is free of interlinking with the excitation magnetic field (12) in a reference position (70) of the axis of rotation (4) and, on the other hand, is interlinked with the excitation magnetic field (12) in at least one actual position (80) of the axis of rotation (4) which is tilted differently with respect to the reference position (70), wherein the conductor loop (3, 7) of the compensation means (16) is electrically short-circuited, wherein in the reference position (70) the plane effectively spanned by the conductor loop (3, 7) of the compensation means (16) with respect to the interlinking of the excitation magnetic field (12) is orthogonal to the axis of rotation (4), and wherein the conductor loop (3, 7) is interlinked with the excitation magnetic field (12) in the actual position (80) of the axis of rotation (4) which is tilted with respect to the reference position (70) so as to counteract the tilting (20).

2. Electric machine according to claim 1, **characterized in that** the means for generating the excitation magnetic field (12) is a permanent magnet (11).

3. Electric machine according to claim 1 or 2, **characterized in that** the means for generating the excitation magnetic field (12) has radial or Halbach-type magnetization with an odd number of pole pairs or diametrical magnetization.

4. Electric machine according to one of claims 1 to 3, **characterized in that** the conductor loop (3, 7) of the compensation means (16) consists of several windings.

5. Electric machine according to one of claims 1 to 4, **characterized in that** the conductor loop (3, 7) of the compensation means (16) consists of an electrically and also magnetically conductive material and at the same time serves to guide the flux for the electric machine (100, 101) or a magnetic bearing.

6. Electric machine according to one of claims 1 to 5, **characterized in that** the conductor loop (3, 7) of the compensation means (16) is equipped with at least one additional component, in particular a resistor, a capacitor and/or an inductor.

7. Electric machine according to one of claims 1 to 6, **characterized in that** at least one means for measuring voltage and/or current, in particular the induced voltage and/or the short-circuit current, or the electromagnetic field generated thereby, is provided in the conductor loop (3, 7) of the compensation means and the tilt angle or the axial displacement is detected as a function of the measurement data.

8. Electric machine according to one of claims 1 to 7, **characterized in that** the bearing means for magnetic bearing are integrated into the electric machine (100, 101) so as to form a bearingless machine equipped with a disc-shaped rotor.

9. Electric machine according to one of claims 1 to 8, **characterized in that** the winding (10) additionally cooperates with the excitation magnetic field (12) to generate a bearing force for magnetic bearing.

## Revendications

1. Machine électrique comportant des moyens de support pour supporter magnétiquement au moins un corps rotatif (2) autour d'un axe de rotation (4) par rapport à au moins un corps non rotatif (1), comprenant ledit au moins un corps rotatif (2) et au moins un corps non rotatif (1), dans laquelle le corps rotatif (2) présente au moins un moyen pour fournir un champ magnétique d'excitation (12) de la machine électrique (100, 101), dans laquelle le corps non rotatif (1) présente au moins un enroulement (10) qui coopère avec le champ magnétique d'excitation (12) pour générer un couple autour de l'axe de rotation (4), et comportant en outre au moins un moyen de compensation (16) qui présente au moins une boucle conductrice électrique (3, 7) séparée de l'enroulement (10), qui, d'une part, n'est pas couplée au champ magnétique d'excitation (12) dans une position de référence (70) de l'axe de rotation (4) et, d'autre part, est couplée au champ magnétique d'excitation (12) dans au moins une autre position réelle (80) de l'axe de rotation (4) inclinée par rapport à la position de référence (70), dans laquelle la boucle conductrice (3, 7) du moyen de compensation (16) est court-circuitée électriquement, dans laquelle, dans la position de référence (70), le plan couvert par la boucle conductrice (3, 7) du moyen de compensation (16) qui est efficace en ce qui concerne le couplage du champ magnétique d'excitation (12) est orthogonal à l'axe de rotation (4), et dans laquelle, dans la position réelle (80) de l'axe de rotation (4) inclinée par rapport à la position de référence (70), la boucle conductrice (3, 7) est couplée au champ magnétique d'excitation (12) pour s'opposer à l'inclinaison (20).

2. Machine électrique selon la revendication 1, **caractérisée en ce que** le moyen servant à générer le champ magnétique d'excitation (12) est un aimant permanent (11).

3. Machine électrique selon la revendication 1 ou 2, **caractérisée en ce que** le moyen servant à générer le champ magnétique d'excitation (12) dispose d'une magnétisation radiale ou de type Halbach avec un nombre impair de paires de pôles ou d'une magnétisation diamétrale.

4. Machine électrique selon l'une des revendications 1 à 3, **caractérisée en ce que** la boucle conductrice (3, 7) du moyen de compensation (16) est constituée de plusieurs spires.

5. Machine électrique selon l'une des revendications 1 à 4, **caractérisée en ce que** la boucle conductrice (3, 7) du moyen de compensation (16) est constituée d'un matériau électriquement et également magnétiquement conducteur et sert en même temps de guide de flux pour la machine électrique (100, 101) ou un palier magnétique.

6. Machine électrique selon l'une des revendications 1 à 5, **caractérisée en ce que** la boucle conductrice (3, 7) du moyen de compensation (16) est équipée d'au moins un composant supplémentaire, en particulier d'une résistance, d'un condensateur et/ou d'une inductance.

7. Machine électrique selon l'une des revendications 1 à 6, **caractérisée en ce que**, dans la boucle conductrice (3, 7) du moyen de compensation, il est prévu au moins un moyen pour mesurer la tension et/ou le courant, en particulier la tension induite et/ou le courant de court-circuit, ou le champ électromagnétique généré de ce fait, et l'angle d'inclinaison ou le déplacement axial est détecté en fonction des données de mesure.

8. Machine électrique selon l'une des revendications 1 à 7, **caractérisée en ce que** les moyens de support pour le support magnétique sont intégrés dans la machine électrique (100, 101), de sorte qu'il en résulte une machine sans palier équipée d'un rotor en forme de disque.

9. Machine électrique selon l'une des revendications 1 à 8, **caractérisée en ce que** l'enroulement (10) coopère en outre avec le champ magnétique d'excitation (12) pour générer une force portante pour le palier magnétique.
